# EUROPÄISCHE PATENTSCHRIFT

(11) **EP 3 546 759 B1**
(45) Veröffentlichungstag und Bekanntmachung des Hinweises auf die Patenterteilung: **01.06.2022**
(21) Anmeldenummer: 19166001.8
(22) Anmeldetag: 28.03.2019
(51) Int. Cl.: F04D 13/06, F04D 13/12, F04D 29/42, F04D 29/58, H02K 9/06

(54) **UMWÄLZPUMPE MIT MOTORLÜFTER**
CIRCULATION PUMP WITH MOTOR BLOWER
POMPE DE RECIRCULATION POURVUE DE VENTILATEUR DU MOTEUR

(30) Priorität: 28.03.2018 DE 202018101717 U
(43) Veröffentlichungstag der Anmeldung: 02.10.2019
(73) Patentinhaber: Speck Pumpen Verkaufsgesellschaft GmbH, 91233 Neunkirchen a. Sand (DE)
(72) Erfinder: Herger, Armin, 91224 Pommelsbrunn (DE)
(74) Vertreter: Reitstötter Kinzebach

(56) Entgegenhaltungen:
- EP-A1- 0 219 730
- EP-A1- 2 848 818
- CN-Y- 2 467 828
- DE-C1- 3 115 698
- DE-U1-202005 014 297
- US-A- 3 644 067
- US-A1- 2017 101 992

## Beschreibung

Die vorliegende Erfindung betrifft eine Umwälzpumpe für Swimmingpools oder Schwimmbäder, die mit einem Motorlüfter versehen ist.

Umwälzpumpen für das Wasser in Swimmingpools oder Schwimmbädern weisen üblicherweise ein Pumpengehäuse auf, in dem eine Zentrifugalpumpe angeordnet ist, die von einem Elektromotor angetrieben wird. Typischerweise weist der Elektromotor ein Gehäuse mit einem im Wesentlichen zylindrischen Motorgehäusemantel auf, der an einer Stirnseite einen Verbindungsflansch zur Verbindung des Elektromotors mit dem Pumpengehäuse aufweist. Die an dieser Stirnseite aus dem Elektromotor ragende Motorwelle kann über eine Kupplung mit dem Laufrad der Zentrifugalpumpe verbunden sein. Bei kompakten Pumpen kann das Laufrad auch direkt auf der Motorwelle sitzen. Derartige Umwälzpumpen sind häufig in schlecht belüfteten Betriebskammern oder -schächten angeordnet, so dass die Abfuhr der Betriebswärme des Elektromotors ein Problem darstellen kann. Daher sind die Elektromotoren häufig mit einem eigenen Lüfter versehen, der üblicherweise an der dem Verbindungsflansch gegenüberliegenden Stirnseite des Motorgehäusemantels angeordnet und so ausgelegt ist, einen Kühlluftstrom entlang der Außenfläche des Motorgehäusemantels zu erzeugen. Üblicherweise umfasst der Lüfter ein Laufrad, das von einer Lüfternabe und auf der Lüfternabe angeordneten Lüfterschaufeln gebildet wird. Die Motorwelle ist üblicherweise auch an der lüfterseitigen Stirnseite aus dem Motorgehäuse herausgeführt, so dass das Laufrad üblicherweise direkt auf der Motorwelle befestigt wird und somit keinen eigenen Antrieb benötigt. Eine solche Umwälzpumpe ist dem Dokument US 2017/101992 A1 zu entnehmen. Ein typisches Lüfterlaufrad für Elektromotoren ist in dem Wikipedia-Artikel "Drehstrom-Asynchronmaschine" in der Abbildung "Normmotor mit Gebläse und Kühlrippen" dargestellt. Bei diesem typischen Lüfterlaufrad sind mehrere Lüfterschaufeln radial orientiert auf der Lüfternabe angeordnet. Die Lüfterschaufeln führen ausgehend von einem Bereich an der Zentralbohrung für die Motorwelle radial über die Stirnseite der Lüfternabe nach außen bis zum Außenumfang der Lüfternabe. Die Lüfterschaufeln sind dabei im Wesentlichen fluchtend mit der Rotationsachse orientiert, d. h. sie sind im Wesentlichen senkrecht zur Stirnseite der Lüfternabe orientiert.

Derartige bekannte Lüfter für Elektromotoren haben zwar den Vorteil, dass ihre Fördereigenschaften unabhängig von der Drehrichtung des Laufrades sind. Sie haben aber den Nachteil, dass bei Erzeugung einer axialen Strömung große Turbulenzen erzeugt werden, die mit einer entsprechenden Lärmentwicklung im Betrieb verbunden sind. Außerdem ist die Effizienz derartiger Motoren geringer, denn für einen gegebenen Luftdurchsatz muss mehr Leistung aufgebracht werden.

Insbesondere im heimischen Bereich, aber auch in öffentlichen Schwimmbädern ist es wünschenswert, dass die Geräuschentwicklung der Umwälzpumpen möglichst gering ist. Da die Motorkühlung eine wesentliche Geräuschquelle derartiger Umwälzpumpen darstellt, liegt der vorliegenden Erfindung das technische Problem zugrunde, eine Umwälzpumpe für Swimmingpools oder Schwimmbäder bereitzustellen, deren Elektromotor mit einem möglichst leisen Lüfter ausgestattet ist.

Aus dem Stand der Technik, beispielsweise dem deutschen Gebrauchsmuster DE 298 22 687 U1 sind Miniatur-Wärmeableitgebläse bekannt, bei denen das Lüfterlaufrad eine größere geschlossene Stirnfläche mit am Außenrand angeordneten Lüfterschaufeln aufweist. Derartige Lüfter sind für Laptops vorgesehen, wobei Luft axial angesaugt und radial abgegeben. Ein solcher Lüfter ist jedoch, selbst in entsprechend vergrößerte Ausführung, wegen dieser Strömungsgeometrie als Kühlung des Motors einer Umwälzpumpe nicht geeignet.

Gelöst wird das oben beschriebene technische Problem durch die Umwälzpumpe für Swimmingpools oder Schwimmbäder mit den Merkmalen des vorliegenden Anspruchs 1. Vorteilhafte Weiterbildungen der Erfindung sind Gegenstände der abhängigen Ansprüche.

Die Erfindung betrifft demnach eine Umwälzpumpe für Swimmingpools oder Schwimmbäder der oben beschriebenen Art, deren Elektromotor mit einem Lüfter versehen ist, der ein Laufrad umfasst, das von einer Lüfternabe und auf der Lüfternabe angeordneten Lüfterschaufeln gebildet wird, wobei die Umwälzpumpe dadurch gekennzeichnet ist, dass die Lüfternabe eine Stirnfläche aufweist, die im Wesentlichen frei von Lüfterschaufeln ist und deren von Lüfterschaufeln freier Durchmesser wenigstens 60% des Durchmessers des Lüfterlaufrads beträgt und dass die Lüfterschaufeln am Außenumfang der Lüfternabe angeordnet sind und eine radiale Höhe aufweisen, die höchstens 20% des Durchmessers des Lüfterlaufrades entspricht.

Es wurde erfindungsgemäß gefunden, dass mit Lüfterschaufeln, die am Außenumfang der Lüfternabe angeordnet sind, eine zumindest genauso effektive Axialströmung von Kühlluft entlang des Motorgehäusemantels erzeugt werden kann, wie mit herkömmlichen Radialschaufellaufrädern, wobei sich das erfindungsgemäße Laufrad aber durch eine wesentlich geringere Geräuschentwicklung auszeichnet. Gleichzeitig wird die Effizienz des Lüfters verbessert, denn bei vergleichbarem Luftdurchsatz ist die erforderliche Leistung geringer.

Gemäß einer bevorzugten Ausführungsform der erfindungsgemäßen Umwälzpumpe betragen der Durchmesser der von Lüfterschaufeln freien Stirnfläche der Lüfternabe wenigstens 70%, insbesondere wenigstens 80% des Durchmessers des Lüfterlaufrades und die radiale Höhe der Lüfterschaufeln höchstens 15%, insbesondere höchstens 10% des Durchmessers des Lüfterlaufrades.

Die radiale Höhe der Lüfterschaufeln bezieht sich dabei auf die Höhe bezogen auf ihren Fußpunkt am Außenumfang der Lüfternabe.

Vorzugsweise sind die Lüfterschaufeln schräg zur Rotationsachse des Lüfterlaufrades, und damit auch schräg zur Drehrichtung des Lüfterlaufrades, am Außenumfang der Lüfternabe angeordnet, was die Förderung des Kühlluftstroms in axialer Richtung verbessert.

Die Lüfterschaufeln weisen vorzugsweise ein gewölbtes Profil mit einer konvexen Außenfläche auf. Die besten Förderleistungen erzielt man, wenn die konvexe Außenfläche der Lüfterschaufeln, abgesehen von der Schrägstellung der Schaufeln, im Wesentlichen in die Drehrichtung des Laufrades orientiert ist.

Vorzugsweise ist die von Lüfterschaufeln freie Stirnfläche der Lüfternabe an ihrer Außenfläche leicht konvex gewölbt, was einen turbulenzfreien Transport der Kühlluft vom Zentralbereich der Lüfternabe in den durch die Lüfterschaufeln erzeugten Unterdruckbereich am Umfang der Lüfternabe begünstigt.

In an sich bekannter Weise ist das Lüfterlaufrad vorzugsweise lösbar auf der Motorwelle des Elektromotors fixiert, was einen leichten Austausch des Lüfterlaufrades im Fall von Reparaturen oder beim Wechsel zu einem leistungsstärkeren Lüfterlaufrad ermöglicht.

Üblicherweise weist der Motorgehäusemantel Kühlrippen auf, die im Wesentlichen parallel zur Längsachse des Elektromotors orientiert sind. Das Lüfterlaufrad ist dann so dimensioniert, dass der axiale Luftstrom im Wesentlichen auf Höhe der Kühlrippen erzeugt wird.

Damit möglichst der gesamte Kühlluftstrom entlang des Motorgehäusemantels bzw. entlang der dort gegebenenfalls vorgesehenen Kühlrippen geführt wird, ist das Lüfterlaufrad vorzugsweise von einer Lüfterhaube umgeben, die eine mit einem luftdurchlässigen Schutzgitter versehene motorferne Stirnseite und eine geschlossene Mantelfläche aufweist, wobei der motorseitige Innendurchmesser der Mantelfläche im Wesentlichen dem Außendurchmesser des mit Kühlrippen versehenen Motorgehäusemantels entspricht. Damit entsteht zwischen dem Gehäuse des Elektromotors und der Mantelfläche der Lüfterhaube ein Ringspalt, in welchem ein axialer Kühlluftstrom in die durch die Kühlrippen gebildeten Zwischenräume geführt werden kann. Gleichzeitig bietet die Lüfterhaube aufgrund des Schutzgitters und der geschlossenen Mantelfläche auch Schutz vor Verletzungen durch das sich drehende Lüfterlaufrad.

In einer bevorzugten Ausführungsform weist die Umwälzpumpe außerdem einen Fasernfänger auf, der vor der saugseitigen Öffnung der Zentrifugalpumpe angeordnet ist und beispielsweise in das Pumpengehäuse integriert sein kann.

Die Erfindung wird im Folgenden anhand von einem bevorzugten Ausführungsbeispiel unter Bezugnahme auf die beigefügten Zeichnungen näher erläutert.

In den Zeichnungen zeigt:
- Figur 1: eine schematische Darstellung einer Umwälzpumpe für Swimmingpools mit Fasernfänger und Elektromotorantrieb;
- Figur 2: eine perspektivische Ansicht eines in Kühlluftansaugrichtung orientierten erfindungsgemäßen Lüfterlaufrades;
- Figur 3: eine perspektivische Rückansicht des Lüfterlaufrades der Figur 2;
- Figur 4: eine Stirnansicht des Lüfterlaufrades der Figur 2;
- Figur 5: einen Querschnitt durch das Lüfterlaufrad der Figuren 2-4 entlang der Linie V-V der Figur 4;
- Figur 6: eine perspektivische Ansicht der in Kühlluftansaugrichtung orientierten Lüfterhaube der erfindungsgemäßen Umwälzpumpe;
- Figur 7: eine Rückansicht der Lüfterhaube der Figur 6;
- Figur 8: eine Stirnansicht der Lüfterhaube der Figur 6;
- Figur 9: einen Querschnitt durch die Lüfterhaube der Figuren 6-8 entlang der Linie IX-IX der Figur 8;
- Figur 10: eine perspektivische Ansicht einer Variante der Lüfterhaube der Figur 6;
- Figur 11: eine Rückansicht der Lüfterhaube der Figur 10;
- Figur 12: eine Stirnansicht der Lüfterhaube der Figur 10; und
- Figur 13: einen Querschnitt durch die Lüfterhaube der Figuren 10-12 entlang der Linie XIII-XIII der Figur 12.

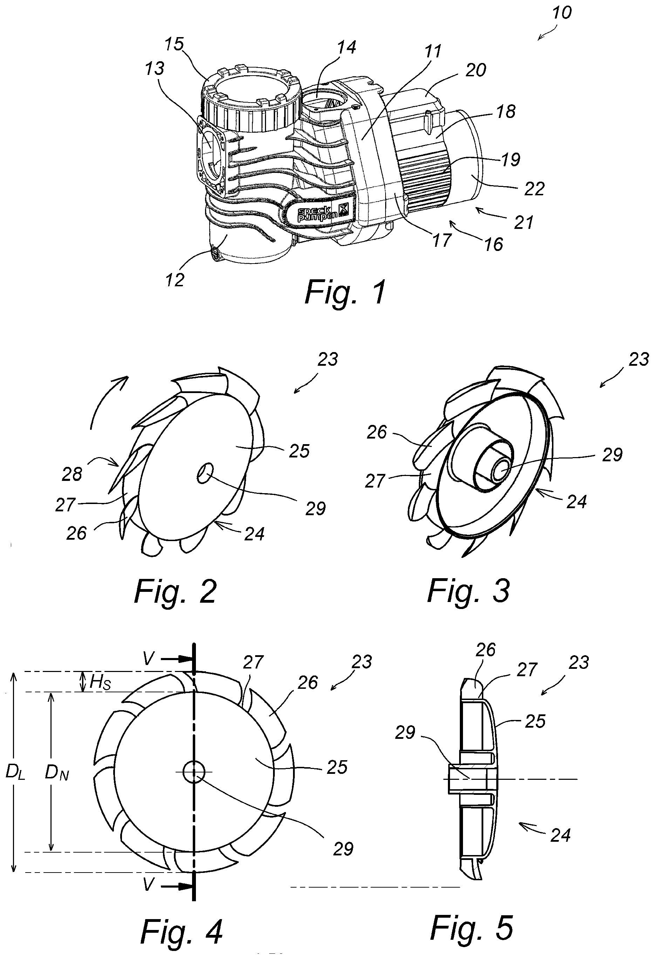

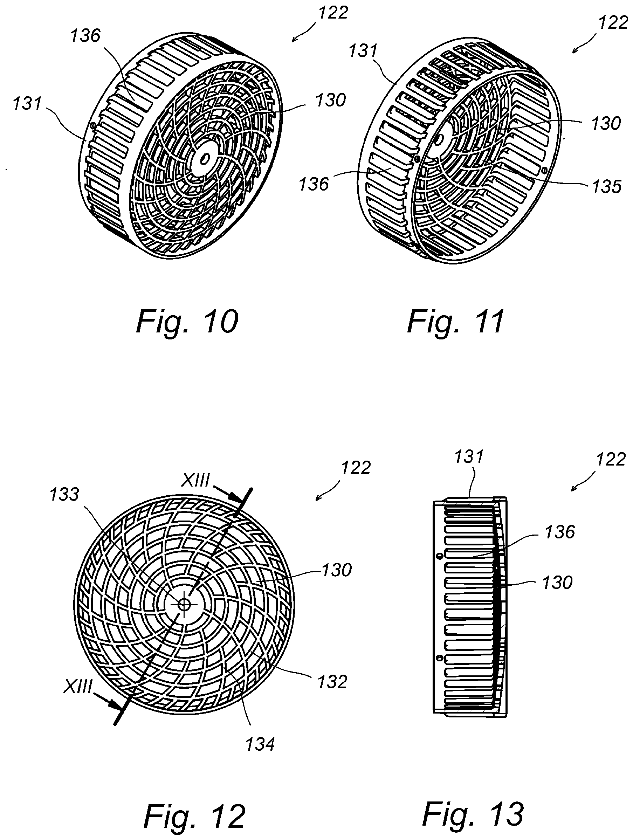

Figur 1 zeigt eine insgesamt mit der Figur 10 bezeichnete Umwälzpumpe für Filteranlagen von Swimmingpools oder Schwimmbädern. Die Umwälzpumpe 10 weist ein Pumpengehäuse 11 auf, in welchem eine nicht näher dargestellte Zentrifugalpumpe zur Förderung des zu filtrierenden Schwimmbadwassers angeordnet ist. Im dargestellten Beispiel ist in das Pumpengehäuse 11 auch ein Fasernfänger 12 integriert, der vor dem saugseitigen Einlass der Zentrifugalpumpe angeordnet ist. Das Pumpengehäuse weist eine saugseitige Einlassöffnung 13 und eine druckseitige Auslassöffnung 14 auf, an welche die entsprechenden Flüssigkeitsleitungen des Wasserkreislaufes angeflanscht werden können. Der Fasernfänger 12 weist einen abnehmbaren Deckel 15 auf, über den ein (nicht dargestellter) Filterkorb zu Reinigungszwecken aus dem Fasernfänger herausgenommen werden kann. Die Umwälzpumpe 10 weist zum Antrieb ihrer Zentrifugalpumpe einen Elektromotor 16 auf, der über einen Verbindungsflansch 17 mit dem Pumpengehäuse 11 verbunden ist. Der Elektromotor 16 ist von einem im Wesentlichen zylindrischen Motorgehäusemantel 18 umgeben, der an seinem Außenumfang mit Kühlrippen 19 versehen ist, die im Wesentlichen parallel zur Motorachse verlaufen. Auf seiner Oberseite weist der Motorgehäusemantel 18 eine verschließbare Kammer 20 auf, in welcher die Steuerungselektronik des Motors spritzwassergeschützt untergebracht ist. An der dem Verbindungsflansch 17 gegenüberliegenden Stirnseite weist der Motorgehäusemantel 18 einen Lüfter 21 auf, der von einer Lüfterhaube 22 umgeben ist.

Der Lüfter der erfindungsgemäßen Umwälzpumpe besteht aus einem Lüfterlaufrad 23, das in den Figuren 2-5 näher dargestellt ist.

Das Lüfterlaufrad 23 der erfindungsgemäßen Umwälzpumpe umfasst eine Lüfternabe 24, deren Stirnfläche 25 im Wesentlichen frei von Lüfterschaufeln ist. Die Lüfterschaufeln 26 sind vielmehr am Außenumfang 27 der Lüfternabe 24 angebracht. Im dargestellten Beispiel weist das Lüfterlaufrad einen Durchmesser D_{L} von 138 mm auf. Der Durchmesser D_{N} der von Lüfterschaufeln freien Stirnfläche der Lüfternabe beträgt hier 110 mm und die radiale Höhe H_{S} der einzelnen Lüfterschaufeln beträgt in der Projektion der Figur 4 10,1 mm. Wie man insbesondere aus den Figuren 2 und 3 erkennt, sind die Lüfterschaufeln 26 schräg zur Rotationsachse des Lüfterlaufrades 23 angeordnet. Außerdem erkennt man in den Figuren 2 und 3, dass die Lüfterschaufeln ein gewölbtes Profil mit einer konvexen Außenfläche 28 aufweisen, wobei die Lüfterschaufeln in ihrer schrägen Orientierung am Außenumfang 27 der Lüfternabe 24 so orientiert sind, dass die konvexe Außenfläche 28 der Lüfterschaufeln 26 im Wesentlichen in die in Figur 2 durch den Pfeil symbolisierte Drehrichtung des Lüfterlaufrades 23 orientiert sind. Das Lüfterlaufrad 23 weist außerdem eine Zentralbohrung 29 auf, in die die Motorwelle des Elektromotors 16 eingreifen kann.

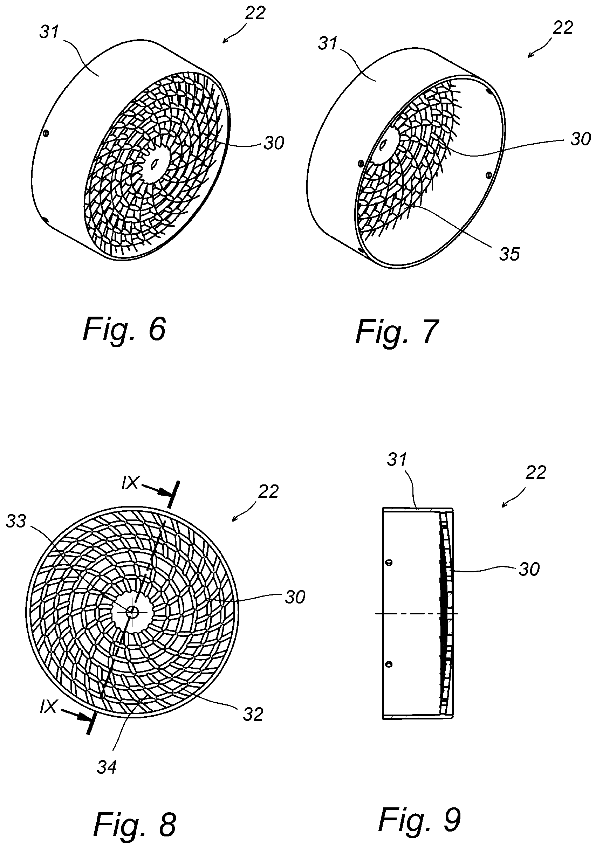

In den Figuren 6 bis 9 sind verschiedene Ansichten einer Lüfterhaube 22 der erfindungsgemäßen Umwälzpumpe dargestellt. Die Lüfterhaube 22 weist ein stirnseitiges, luftdurchlässiges Schutzgitter 30 und eine im Wesentlichen zylindrische Mantelfläche 31 auf. Im dargestellten Beispiel ist eine Geometrie des Schutzgitters 30 gewählt worden, die im Design auch auf Drehrichtung des Lüfterlaufrades verweist.

Dazu wird das Gitter einerseits durch konzentrische Kreise 32 um die Zentralachse 33 herum und andererseits durch im Wesentlichen in radialer Richtung verlaufende Spiralarmsegmente 34 gebildet Neben dem designerischen Aspekt können die so gebildeten Stege 35 des Schutzgitters 30 der einströmenden Kühlluft bereits eine gewisse Vorzugsrichtung aufprägen, was die Förderung der Kühlluft etwas effizienter und turbulenzfreier gestalten kann.

In den Figuren 10 bis 13 sind verschiedene Ansichten einer Variante der Lüfterhaube 22 der Figuren 6 bis 9 dargestellt. Elemente welche identisch mit Elementen der Figuren 6 bis 9 sind, werden durch die gleichen, aber um 100 erhöhten Bezugsziffern bezeichnet. Die Lüfterhaube 122 der Figuren 9 bis 13 weist wiederum ein stirnseitiges, luftdurchlässiges Schutzgitter 130 und eine im Wesentlichen zylindrische Mantelfläche 131 auf. Auch im Beispiel dieser Variante ist eine Geometrie des Schutzgitters 130 durch konzentrische Kreise 132 um die Zentralachse 133 und durch im Wesentlichen in radialer Richtung verlaufende Spiralarmsegmente 134 charakterisiert, so dass auch hier Stege 135 gebildet werden. In den Figuren 6 bis 9 sind verschiedene Ansichten einer Lüfterhaube 22 der erfindungsgemäßen Umwälzpumpe dargestellt. Die Lüfterhaube 22 weist ein stirnseitiges, luftdurchlässiges Schutzgitter 30 und eine im Wesentlichen zylindrische Mantelfläche 31 auf. Im dargestellten Beispiel ist eine Geometrie des Schutzgitters 30 gewählt worden, die im Design auch auf Drehrichtung des Lüfterlaufrades verweist. Dazu wird das Gitter einerseits durch konzentrische Kreise 32 um die Zentralachse 33 herum und andererseits durch im Wesentlichen in radialer Richtung verlaufende Spiralarmsegmente 34 gebildet Neben dem designerischen Aspekt können die so gebildeten Stege 35 des Schutzgitters 30 der einströmenden Kühlluft bereits eine gewisse Vorzugsrichtung aufprägen, was die Förderung der Kühlluft etwas effizienter und turbulenzfreier gestalten kann. Die Lüfterhaube 122 unterschiedet sich von der Lüfterhaube 22 durch Umfangsschlitze 136, welche bei der Ausführungsform der Figuren 10 bis 13 in der Mantelfläche 132 der Lüfterhaube 122 ausgespart sind. Durch diese Umfangsschlitze kann ein Teil der axial angesaugten Kühlluft austreten und so die Kühlung eines üblicherweise auf dem Pumpengehäuse aufgebauten Frequenzumformers verstärken.

### Bezugszeichenliste

- 10: Umwälzpumpe
- 11: Pumpengehäuse
- 12: Fasernfänger
- 13: Einlassöffnung
- 14: Auslassöffnung
- 15: Deckel des Fasernfängers
- 16: Elektromotor
- 17: Verbindungsflansch
- 18: Motorgehäusemantel
- 19: Kühlrippen
- 20: Kammer
- 21: Lüfter
- 22, 122: Lüfterhaube
- 23: Lüfterlaufrad
- 24: Lüfternabe
- 25: Stirnflläche der Lüfternabe
- 26: Lüfterschaufeln
- 27: Außenumfang
- 28: konvexe Außenfläche
- 29: Zentralbohrung
- 30, 130: Schutzgitter
- 31, 131: Mantelfläche
- 32, 132: Kreise
- 33, 133: Zentralachse
- 34, 134: Spiralarmsegement
- 35, 135: Stege
- 136: Umfangsschlitze

## Patentansprüche

1. Umwälzpumpe (10) für Swimmingpools oder Schwimmbäder, mit
einem Pumpengehäuse (11), in dem eine Zentrifugalpumpe angeordnet ist,
einem Elektromotor (16), der von einem im Wesentlichen zylindrischen Motorgehäusemantel (18) umgeben ist, wobei der Motorgehäusemantel (18) an einer Stirnseite einen Verbindungsflansch (17) zur Verbindung des Elektromotors (16) mit dem Pumpengehäuse (11) aufweist,
einem Lüfter (21), der an der dem Verbindungsflansch (17) gegenüberliegenden Stirnseite des Motorgehäusemantels (18) angeordnet und ausgelegt ist, einen Kühlluftstrom entlang der Außenfläche des Motorgehäusemantels (18) zu erzeugen, wobei der Lüfter (21) ein Lüfterlaufrad (23) umfasst, das von einer Lüfternabe (24) und auf der Lüfternabe (24) angeordneten Lüfterschaufeln (26) gebildet wird,
**gekennzeichnet dadurch,**
**dass** die Lüfternabe (24) eine Stirnfläche (25) aufweist, die frei von Lüfterschaufeln ist und deren Durchmesser (D_{N}) wenigstens 60% des Durchmessers (D_{L}) des Lüfterlaufrades (23) beträgt, und
**dass** die Lüfterschaufeln (26) am Außenumfang (27) der Lüfternabe (24) angeordnet sind und eine radiale Höhe (Hₛ) aufweisen, die höchstens 20 % des Durchmessers (D_{L}) des Lüfterlaufrades (23) beträgt.

2. Umwälzpumpe gemäß Anspruch 1, **dadurch gekennzeichnet, dass** der Durchmesser (D_{N}) der Stirnfläche der Lüfternabe (24) wenigstens 70%, insbesondere wenigstens 80% des Durchmessers (D_{L}) des Lüfterlaufrades (23) und die radiale Höhe (Hₛ) der Lüfterschaufeln (26) höchstens 15%, insbesondere höchstens 10% des Durchmessers (D_{L}) des Lüfterlaufrades (23) betragen.

3. Umwälzpumpe gemäß einem der Ansprüche 1 oder 2, **dadurch gekennzeichnet, dass** die Lüfterschaufeln (26) schräg zur Rotationsachse des Lüfterlaufrades (23) am Außenumfang (27) der Lüfternabe (24) angeordnet sind.

4. Umwälzpumpe gemäß Anspruch 3, **dadurch gekennzeichnet, dass** die Lüfterschaufeln (26) ein gewölbtes Profil mit konvexen Außenflächen (28) aufweisen.

5. Umwälzpumpe gemäß Anspruch 4, **dadurch gekennzeichnet, dass** die konvexen Außenflächen (28) der Lüfterschaufeln (26) in die Drehrichtung des Laufrades (23) orientiert sind.

6. Umwälzpumpe gemäß einem der Ansprüche 1 bis 5, **dadurch gekennzeichnet, dass** die Stirnfläche (25) der Lüfternabe (24) konvex gewölbt ist.

7. Umwälzpumpe gemäß einem der Ansprüche 1 bis 6, **dadurch gekennzeichnet, dass** das Lüfterlaufrad (23) lösbar auf einer Motorwelle des Elektromotors (16) fixiert ist.

8. Umwälzpumpe gemäß einem der Ansprüche 1 bis 7, **dadurch gekennzeichnet, dass** der Motorgehäusemantel (18) Kühlrippen (19) aufweist, die im Wesentlichen parallel zur Längsachse des Elektromotors (16) verlaufen.

9. Umwälzpumpe gemäß Anspruch 8, **dadurch gekennzeichnet, dass** das Lüfterlaufrad (23) von einer Lüfterhaube (22,122) umgeben ist, die eine mit einem Schutzgitter (30,130) versehene, motorferne Stirnseite und eine geschlossene Mantelfläche (31,131) aufweist, wobei der motorseitige Innendurchmesser der Mantelfläche (31,131) im Wesentlichen dem Außendurchmesser des mit Kühlrippen (19) versehenen Motorgehäusemantels (18) entspricht.

10. Umwälzpumpe gemäß einem der Ansprüche 1 bis 9, **dadurch gekennzeichnet, dass** vor dem Pumpengehäuse (11) ein Fasernfänger (12) angeordnet ist.

## Claims

1. Circulation pump (10) for swimming pools or swimming baths, having
a pump housing (11) in which is arranged a centrifugal pump,
an electric motor (16) which is surrounded by a substantially cylindrical motor housing shell (18), wherein the motor housing shell (18) has on an end face a connecting flange (17) for connecting the electric motor (16) to the pump housing (11),
a ventilator (21), which is arranged on the end face of the motor housing shell (18) which is opposite the connecting flange (17), and which is designed to generate a cooling air flow along the outer surface of the motor housing shell (18), wherein the ventilator (21) has a ventilator impeller (23) which is formed by a ventilator hub (24) and ventilator blades (26) arranged on the ventilator hub (24),
**characterised in**
**that** the ventilator hub (24) has an end face (25) which is free of ventilator blades and the diameter (D_{N}) of which is at least 60% of the diameter (D_{L}) of the ventilator impeller (23), and
**that** the ventilator blades (26) are arranged on the outer circumference (27) of the ventilator hub (24) and have a radial height (Hₛ) which is at most 20% of the diameter (D_{L}) of the ventilator impeller (23).

2. Circulation pump according to claim 1, **characterised in that** the diameter (D_{N}) of the end face of the ventilator hub (24) is at least 70%, in particular at least 80% of the diameter (D_{L}) of the ventilator impeller (23) and the radial height (Hₛ) of the ventilator blades (26) is at most 15%, in particular at most 10% of the diameter (D_{L}) of the ventilator impeller (23).

3. Circulation pump according to any of claims 1 or 2, **characterised in that** the ventilator blades (26) are arranged obliquely to the rotational axis of the ventilator impeller (23) on the outer circumference (27) of the ventilator hub (24).

4. Circulation pump according to claim 3, **characterised in that** the ventilator blades (26) have a domed profile with convex outer surfaces (28).

5. Circulation pump according to claim 4, **characterised in that** the convex outer surfaces (28) of the ventilator blades (26) are oriented in the direction of rotation of the impeller (23).

6. Circulation pump according to any of claims 1 to 5, **characterised in that** the end face (25) of the ventilation hub (24) is convexly domed.

7. Circulation pump according to any of claims 1 to 6, **characterised in that** the ventilator impeller (23) is fixed releasably on a motor shaft of the electric motor (16).

8. Circulation pump according to any of claims 1 to 7, **characterised in that** the motor housing shell (18) has cooling ribs (19) which extend substantially parallel to the longitudinal axis of the electric motor (16).

9. Circulation pump according to claim 8, **characterised in that** the ventilator impeller (23) is surrounded by a ventilator hood (22, 122) which has an end face, remote from the motor, equipped with a protective mesh (30, 130) and a closed shell surface (31, 131), wherein the motor-side inner diameter of the shell surface (31, 131) corresponds substantially to the outer diameter of the motor housing shell (18) equipped with cooling ribs (19).

10. Circulation pump according to any of claims 1 to 9, **characterised in that** a fibre trap (12) is arranged in front of the pump housing (11).

## Revendications

1. Pompe de recirculation (10) pour piscines ou bassins, avec
un carter de pompe (11) au sein duquel est agencée une pompe centrifuge,
un moteur électrique (16) entouré par une enveloppe de carter de moteur (18) essentiellement cylindrique, l'enveloppe de carter de moteur (18) présentant sur une face d'extrémité une bride de liaison (17) permettant de relier le moteur électrique (16) au carter de pompe (11),
un ventilateur (21) agencé sur la face d'extrémité, opposée à la bride de liaison (17), de l'enveloppe de carter de moteur (18) et conçu pour générer un flux d'air de refroidissement le long de la surface extérieure de l'enveloppe de carter de moteur (18), le ventilateur (21) comprenant une roue de ventilateur (23) formée par un moyeu de ventilateur (24) et des pales de ventilateur (26) agencées sur le moyeu de ventilateur (24),
**caractérisée en ce que**
le moyeu de ventilateur (24) comprend une face d'extrémité (25) exempte de pales de ventilateur et dont le diamètre (D_{N}) représente au moins 60 % du diamètre (D_{L}) de la roue de ventilateur (23), et **en ce que** les pales de ventilateur (26) sont agencées sur la circonférence extérieure (27) du moyeu de ventilateur (24) et présentent une hauteur radiale (H_{S}) représentant au plus 20 % du diamètre (D_{L}) de la roue de ventilateur (23).

2. Pompe de recirculation selon la revendication 1, **caractérisée en ce que** le diamètre (D_{N}) de la surface d'extrémité du moyeu de ventilateur (24) est d'au moins 70 %, en particulier d'au moins 80 %, du diamètre (D_{L}) de la roue de ventilateur (23), et la hauteur radiale (Hₛ) des pales de ventilateur (26) est d'au plus 15 %, en particulier d'au plus 10 %, du diamètre (D_{L}) de la roue de ventilateur (23).

3. Pompe de recirculation selon la revendication 1 ou 2, **caractérisée en ce que** les pales de ventilateur (26) sont agencées de manière oblique par rapport à l'axe de rotation de la roue de ventilateur (23) sur la circonférence extérieure (27) du moyeu de ventilateur (24).

4. Pompe de recirculation selon la revendication 3, **caractérisée en ce que** les pales de ventilateur (26) présentent un profil courbe avec des surfaces extérieures convexes (28).

5. Pompe de recirculation selon la revendication 4, **caractérisée en ce que** les surfaces extérieures convexes (28) des pales de ventilateur (26) sont orientées dans le sens de rotation de la roue (23).

6. Pompe de recirculation selon l'une quelconque des revendications 1 à 5, **caractérisée en ce que** la surface d'extrémité (25) du moyeu de ventilateur (24) est courbée de manière convexe.

7. Pompe de recirculation selon l'une quelconque des revendications 1 à 6, **caractérisée en ce que** la roue de ventilateur (23) est fixée de manière amovible sur un arbre de moteur du moteur électrique (10).

8. Pompe de recirculation selon l'une quelconque des revendications 1 à 9, **caractérisée en ce que** l'enveloppe de carter de pompe (18) comprend des nervures de refroidissement qui s'étendent de manière essentiellement parallèle à l'axe longitudinal du moteur électrique (16).

9. Pompe de recirculation selon la revendication 8, **caractérisée en ce que** la roue de ventilateur (23) est entourée par un capot de ventilateur (22, 122) qui comprend une face d'extrémité distante du moteur et munie d'une grille de protection (30, 130) et une surface périphérique (31, 131) fermée, le diamètre intérieur, côté moteur, de la surface périphérique (31, 131) correspondant essentiellement au diamètre extérieur de l'enveloppe de carter de moteur (18) munie de nervures de refroidissement (19).

10. Pompe de recirculation selon l'une quelconque des revendications 1 à 9, **caractérisée en ce qu'**un collecteur de fibres (12) est agencé devant le carter de pompe (11).
